# EUROPÄISCHE PATENTSCHRIFT

(11) **EP 1 459 835 B1**
(45) Veröffentlichungstag und Bekanntmachung des Hinweises auf die Patenterteilung: **24.04.2013**
(21) Anmeldenummer: 03005463.9
(22) Anmeldetag: 15.03.2003
(51) Int. Cl.: B23K 26/12, B23K 26/14

(54) **Laserbearbeitungsverfahren mit einem Laserbearbeitungskopf zum Laserschneiden und zum Laserschweissen**
Laser machining method with a laser machining nozzle for laser welding and laser cutting
Méthode d'usinage par laser avec une buse d'usinage par laser pour souder et couper par laser

(43) Veröffentlichungstag der Anmeldung: 22.09.2004
(73) Patentinhaber: TRUMPF Werkzeugmaschinen GmbH + Co. KG, 71254 Ditzingen (DE)
(72) Erfinder: Wessner Michael, 70839 Gerlingen (DE)
(74) Vertreter: Kohler Schmid Möbus

(56) Entgegenhaltungen:
- EP-A- 0 411 535
- EP-A1- 1 029 628
- EP-A2- 0 458 181
- DE-A- 3 822 097
- GB-A- 2 163 692
- US-A- 5 786 561
- PATENT ABSTRACTS OF JAPAN vol. 009, no. 261 (M-422), 18. Oktober 1985 (1985-10-18) & JP 60 108191 A (MITSUBISHI DENKI KK), 13. Juni 1985 (1985-06-13)
- PATENT ABSTRACTS OF JAPAN vol. 1997, no. 12, 25. Dezember 1997 (1997-12-25) & JP 09 220687 A (AMADA CO LTD), 26. August 1997 (1997-08-26)
- PATENT ABSTRACTS OF JAPAN vol. 1999, no. 14, 22. Dezember 1999 (1999-12-22) & JP 11 239889 A (AMADA CO LTD), 7. September 1999 (1999-09-07)

## Beschreibung

Die Erfindung betrifft das Laserschneiden und das Laserschweißen insbesondere mit einem CO₂-Laser und die Zuführung eines Schneidgases und eines Schweißgases in Richtung einer Bearbeitungsstelle eines zu bearbeitenden Werkstücks.

Laserbearbeitungsköpfe bilden den Abschluss der Strahlführung vom Laser zur Bearbeitungsstelle und fokussieren den Laserstrahl auf die Bearbeitungsstelle. Sie enthalten Zuführungen für Arbeits- und/oder Schutzgase und Sensoren zur Abstandsregelung vom Werkstück.

Beim Laserschneiden ist ein Druck des Laserschneidgases bis 20 bar erforderlich, um die Schlacke aus der Schnittfuge auszutreiben.

Bei Laserleistungen bis etwa 5 kW wird im Schneidkopf ein Druckraum erzeugt, den der Laserstrahl durchläuft und der durch eine (fokussierende) Linse abgedichtet wird. Für unterschiedliche Blechdicken und Materialien sind unterschiedliche Düsenquerschnitte und Bohrungen in der Düse notwendig. Ein derartiger Schneidkopf ist z.B. durch die DE3037981 bekannt geworden.

Alternativ zu den Schneidköpfen mit einer Linsenoptik kommen Schneidköpfe mit einer Spiegeloptik zum Einsatz. Dann werden zur Druckerzeugung in der Regel so genannte Ringspaltdüsen eingesetzt, bei denen ein separater Druckraum vorhanden ist (z.B. EP 0 741 627 A1 oder EP 0 989 921 A1).

Für das Laserschweißen werden auf Grund der dort üblichen höheren Leistungen und geringeren Gasdrücke nahezu ausschließlich Spiegeloptiken eingesetzt. Außerdem sind Spiegeloptiken gegenüber Verschmutzungen (die beim Laserschweißen leichter entstehen als beim Laserschneiden) weniger empfindlich als Linsenoptiken, weil sie direkt gekühlt werden können.

Bei geringen Laserleistungen wird das Gas konzentrisch der Bearbeitungsstelle zugeführt. Bei höheren Laserleistungen erfolgt die Zufuhr seitlich.

Laserbearbeitungsköpfe müssen auf Grund von dreidimensionalen Aufgaben häufig schlank sein, um eine möglichst geringe Störkontur zu erreichen.

Um die Maschinen flexibler zu gestalten, ist ein universell einsetzbarer Bearbeitungskopf wünschenswert, der möglichst wenige manuelle Umrüstvorgänge notwendig macht, also insbesondere die folgenden Umrüstvorgänge vermeidet: Wechsel des Bearbeitungskopfes zur Anpassung an das Schneiden und Schweißen, Düsenwechsel zur Anpassung an unterschiedliche Materialien und Materialdicken sowie Anpassung des Abstands zwischen Werkstück und Bearbeitungskopf an die jeweilige Bearbeitungsaufgabe. Diese Wechsel werden im Stand der Technik meist durch mechanische Verstell-, Schwenk- und Klappmechanismen, durch Strahlweichen oder durch Wechselstationen, an denen Bearbeitungskopf oder -düse ausgewechselt werden, realisiert (z.B. EP0411535).

Aus der GB-A-2 163 692 ist ein Laserbearbeitungskopf mit einer ersten, zentralen Düse zum Austritt eines Ausgangsstrahls eines Lasers sowie eines ersten Gasstroms bekannt geworden. Eine zweite, die erste umgebende koaxiale Düse dient zum Austritt eines zweiten Gasstroms. Es ist eine Steuereinrichtung vorgesehen, um die Gasflussrate sowie der Art des Gases, welches durch jede der Düsen strömt, zu bestimmen.

Ein Laserbearbeitungskopf mit einem ähnlichen Aufbau, der wahlweise zum Schneiden oder zum Schweißen genutzt werden kann, ist in der JP 60 108191 A beschrieben. Dort wird über einen ersten Port einer zentralen Düse ein Hilfsgas zum Laserschneiden zugeführt und über einen zweiten Port wird in einen Zwischenraum zwischen der Düse und einer Abschirmung ein Inertgas zum Laserschweißen eingebracht.

Die EP 0 458 181 A2 beschreibt eine Düse zum Laserstrahlschweißen oder zum Laserstrahischneiden, welche einen zentral angeordneten Düsenkanal aufweist. Einer oder mehrere Kanäle, die zu einem Sintermaterial- oder Siebpaket führen, sind um den zentralen Düsenkanal eingebaut. Durch den zentral angeordneten Düsenkanal wird ein Schutz- oder Schneidgas gepumpt. Durch den bzw. die zusätzlichen Düsenkanäle kann ein anders Gas oder Gasgemisch als durch den zentral angeordneten Düsenkanal geleitet werden.

Die EP 1 029 628 A1 zeigt eine Düse zur Zuführung eines Gasstroms auf ein Werkstück, der im Wesentlichen ringförmig um den Laserstrahl auf die Werkstückoberfläche geführt wird, wobei der Gasstrom im Innern des Ringstroms eine zur Laserstrahlachse hin gerichtete Radialkomponente aufweist. Sowohl ein Schneidgas als auch ein Schweißgas werden durch ein- und denselben Düsenkanal zugeführt.

Der Anmelder hat sich die Aufgabe gestellt, ein Laserbearbeitungsverfahren unter Verwendung eines kompakten Laserbearbeitungskopfs zu schaffen, welcher schnell, einfach und weitgehend automatisch auf unterschiedliche Bearbeitungsaufgaben anpassbar und außerdem einfach zu fertigen ist.

Diese Aufgabe wird durch ein Verfahren zur Laserbearbeitung eines Werkstücks mit einem Laserbearbeitungskopf gelöst, welcher eine Bearbeitungsdüse aufweist, wobei dem Werkstück mit Hilfe der Bearbeitungsdüse sowohl ein Schneidgas als auch ein Schweißgas je nach Wahl der Laserbearbeitung zugeführt werden kann.

Erfindungsgemäß umfasst die Bearbeitungsdüse eine Innenhülse und eine die Innenhülse umgebende Außenhülse, wobei zwischen den beiden Hülsen ein erster Hohlraum ausgebildet ist, wobei die Außenhülse einen zu dem ersten Hohlraum konzentrisch angeordneten zweiten Hohlraum aufweist, und wobei konzentrisch zu dem Laserstrahl entweder das Schneidgas durch den ersten Hohlraum oder das Schweißgas durch den zweiten Hohlraum zugeführt wird.

Der erste Hohlraum kann durch einen ersten Ringspalt und der zweite Hohlraum kann durch einen zweiten Ringspalt ausgebildet sein. Der erste Hohlraum und/oder der zweite Hohlraum können auch durch einen Ringkanal ausgebildet sein, von dem aus Bohrungen zu der dem Werkstück zugewandten Seite der Düse führen. Bevorzugt kann hierbei der erste Ringspalt in einen ersten Zuführungskanal für das Schneidgas und der zweite Zuführungskanal kann in einen zweiten Zuführungskanal für das Schweißgas übergehen. Somit kann das jeweilige zuzuführende Gas konzentrisch zu dem Laserstrahl zugeführt werden.

Auf Grund der Verwendung einer einzigen Bearbeitungsdüse und der wahlweisen Ansteuerung der Gaszufuhr wird erreicht, dass ein Düsenwechsel in vielen Fällen nicht mehr erforderlich ist und eine größere Flexibilität bei der Laserbearbeitung erreicht werden kann. Durch die Zusammenfassung oder Integration beider Laserbearbeitungsvarianten in einen Bearbeitungskopf kann die Ausbildung und der Einsatz mechanischer Schwenk- und Klappmechanismen zum Wechsel von Bearbeitungsköpfen und Düsen entfallen, weil eine erfindungsgemäße Umschaltung nunmehr mit Hilfe einer Steuereinheit über einen einzigen Bearbeitungskopf realisiert wird. Zusätzlich wird eine geringe Störkontur erreicht. Zum Schutz der Strahlführung vor rückströmendem Gas können Mittel zum Einblasen von Druckluft in den Laserbearbeitungskopf ("Crossjet") senkrecht zur Strahlrichtung vorgesehen sein.

Zwei Ausführungsbeispiele der Erfindung sind in der Zeichnung schematisch dargestellt und werden nachfolgend mit Bezug zur Figur der Zeichnung näher erläutert. Es zeigt:
- **Fig. 1**: eine Düsenanordnung eines Laserbearbeitungskopfs im Längsschnitt;
- **Fig. 2**: einen Laserbearbeitungskopf im Längsschnitt;
- **Fig. 3**: Gaszuführungen des Laserbearbeitungskopfs nach Fig. 3.

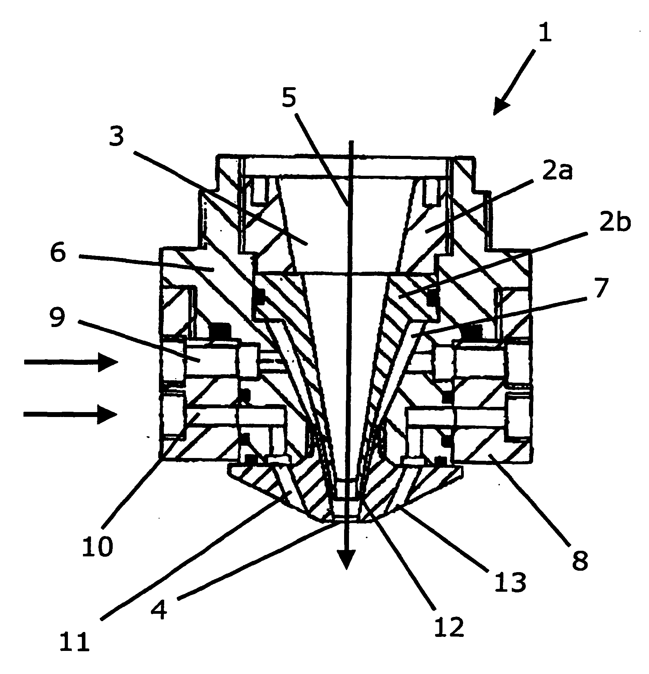

Aus der **Fig. 1** ist ersichtlich, dass eine Bearbeitungsdüse 1 eines Laserbearbeitungskopfs einer Laserbearbeitungsmaschine zur Führung eines Laserstrahls und zweier Gase in Richtung des zu bearbeitenden Werkstücks vorgesehen ist. Der Laserbearbeitungskopf kann sowohl für Laserschweißals auch für Laserschneidaufgaben verwendet werden. Dies wird durch die Konstruktion der Bearbeitungsdüse 1, welche sich an der Spitze des Laserbearbeitungskopfs befindet, realisiert. Mit Hilfe der Bearbeitungsdüse 1 kann sowohl Prozessgas zum Laserschweißen als auch Schneidgas zum Laserschneiden zugeführt werden. Die Gase werden koaxial zugeführt. Je nach Wahl der Laserbearbeitung kann mit Hilfe einer in der Figur nicht gezeigten Steuereinheit und damit verbundenen Einrichtungen wie Ventilen, Sensoren, Druckreglern usw. ein Schneidgas oder alternativ ein Arbeitsgas /Schutzgas eingeblasen werden. Beim Laserschneiden wird die Bearbeitung durch Hinzufügen eines Schneidgases wie Sauerstoff, Stickstoff, Argon oder einfach Luft unterstützt, indem die Schmelze aus der Schnittfuge mit oder ohne begleitende Oxidation getrieben wird. Beim Laserschweißen wird ein Prozessgas wie Argon, Helium, Stickstoff oder Kohlendioxid in der Regel zum Schutz der Schweißnaht oder zur Unterstützung des Schweissprozesses eingesetzt.

Die Bearbeitungsdüse **1** besteht im Wesentlichen aus einem Druckstück **2a** und einer kegelförmigen Innenhülse **2b,** welche mittels einer Durchgangsbohrung einen Strahlführungsraum **3** begrenzen. Über die Austrittsöffnung **4** kann der Laserstrahl **5** austreten und fokussiert auf das Werkstück auftreffen. Konzentrisch zu dem Druckstück **2a** und der Innenhülse **2b** ist eine Außenhülse **6** angeordnet, wobei durch die Anordnung der Innenhülse **2b** und der Außenhülse **6** ein Ringspalt **7** definiert wird. Der Ringspalt **7** geht in einen ersten Zuführungskanal **9** für das Schneidgas über. Wiederum konzentrisch zu der Außenhülse **6** ist ein Anschlusskörper **8** auf der Außenhülse **6** aufgebracht. In dem Anschlusskörper **8** ist ein zweiter Zuführungskanal **10** für das Schweißgas ausgebildet, welcher in einen zu dem Ringspalt **7** nahezu konzentrisch verlaufenden zweiten Ringspalt **11** übergeht. Je nach Bearbeitungsaufgabe kann wahlweise die eine oder die andere Art der Gaszuführung angewählt werden, so dass entweder aus der Spaltöffnung **12** das Schneidgas oder aus der Kanalöffnung **13** das Schweißgas austritt.

Alternativ zu dem zweiten Ringspalt **11** ist auch ein um den Ringspalt **7** konzentrisch angeordneter Ringkanal denkbar, von dem aus Bohrungen zu der dem Werkstück zugewandten Seite der Düse führen. Der Vorteil dieser Ausführungsform besteht darin, dass sie einfacher herzustellen ist.

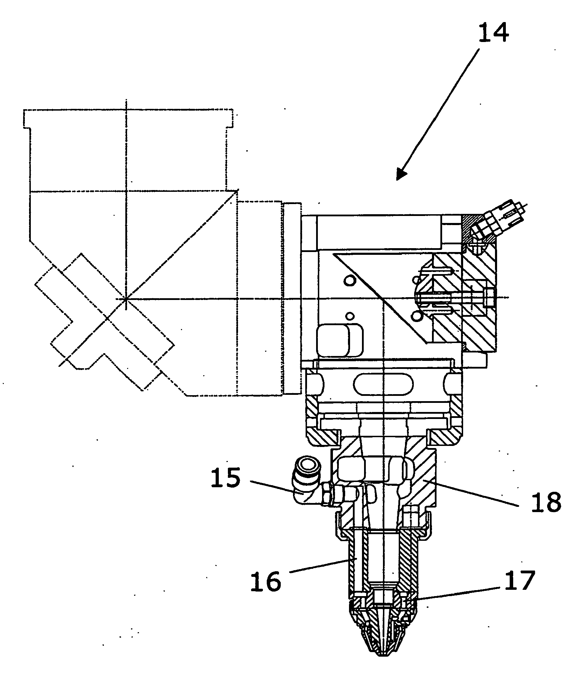

In den Laserbearbeitungskopf **14** gemäß **Fig. 2** ist ein parabolischer, wassergekühlter Kupferspiegel **19** als Fokussierelement integriert. Die an sich bekannten Elemente der Strahlführung und der Fokussierung werden hier nicht näher beschrieben. Die Fokuslage wird mittels eines adaptiven Kupferspiegels, der vor dem Bearbeitungskopf angeordnet ist, verstellt. Dies ist aber auch manuell, durch einen Verschiebemechanismus der Düse und gleichzeitige Verstellung des Abstands von Düse zum Werkstück, möglich.

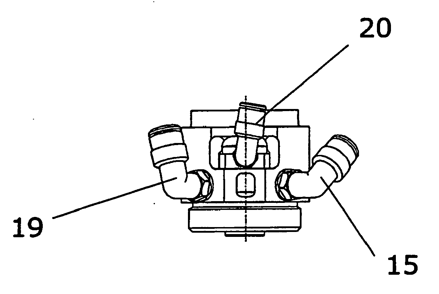

Der Fokussierspiegel wird mit Hilfe senkrecht zur Strahlrichtung in den Bearbeitungskopf eingeblasener Druckluft (siehe Bezugszeichen **18, 20** in der Figur 2 bzw. 3) ("Crossjet") vor Prozessspritzern geschützt. Weiterhin hat der "Crossjet" die Aufgabe, die Strahlführung vor rückströmendem Gas zu schützen, um das Aufblasen der Faltenbälge zu verhindern und um negative Einflüsse auf den Laserstrahl zu verhindern.

Der Bearbeitungskopf besitzt eine kapazitive Abstandsregelung. So kann der "Abstand der Bearbeitungsdüse **1** zum Werkstück, sowohl beim Schneiden als auch beim Schweißen, programmiert und geregelt werden.

Gemäß **Fig. 2** weist ein Laserbearbeitungskopf **14** zum Laserschweißen und zum Laserschneiden eine Bearbeitungsdüse mit einer ersten Bohrung **16** zum Zuführen eines Schweißgases und einer zweiten Bohrung **17** zum Zuführen eines Schneidgases auf. Das Schweißgas kann in die Bohrung **16** über die Zuführung **15** einströmen. **Fig. 2** zeigt eine beispielhafte Integration der erfindungsgemäßen Kombination von Schweißgas- und Schneidgaszuführungen bei einem Laserbearbeitungskopf **14**. Ein Crossjet **18** schützt die Strahlführung vor rückströmendem Gas.

**Fig. 3** zeigt eine dreidimensionale Ansicht der Gaszuführung **15** für das Schweißgas, der Gaszuführung **21** für das Schneidgas und der Gaszuführung **20** für Druckluft des Crossjets 18.

### BEZUGSZEICHENLISTE

- 1: Bearbeitungsdüse
- 2a: Druckstück
- 2b: Innenhülse
- 3: Strahlführungsraum
- 4: Austrittsöffnung
- 5: Laserstrahl
- 6: Außenhülse
- 7: Ringspalt
- 8: Anschlusskörper
- 9: Zuführungskanal
- 10: Zuführungskanal
- 11: Ringspalt
- 12: Spaltöffnung
- 13: Kanalöffnung
- 14: Laserbearbeitungskopf
- 15: Gaszuführung
- 16: Erste Bohrung
- 17: Zweite Bohrung
- 18: Crossjet
- 19: Kupferspiegel
- 20: Gaszuführung
- 21: Gaszuführung

## Patentansprüche

1. Verfahren zur Laserbearbeitung eines Werkstücks mit einem Laserbearbeitungskopf, welcher eine Bearbeitungsdüse (1) aufweist, wobei dem Werkstück mit Hilfe der Bearbeitungsdüse (1) sowohl ein Schneidgas als auch ein Schweißgas je nach Wahl der Laserbearbeitung zugeführt werden kann, **dadurch gekennzeichnet, dass** die Bearbeitungsdüse (1) eine Innenhülse (2b) und eine die Innenhülse (2b) umgebende Außenhülse (6) umfasst, wobei zwischen den beiden Hülsen (2b; 6) ein erster Hohlraum (7) ausgebildet ist und wobei die Außenhülse (6) einen zu dem ersten Hohlraum (7) konzentrisch angeordneten zweiten Hohlraum (11) aufweist, und dass konzentrisch zu dem Laserstrahl (5) entweder das Schneidgas durch den ersten Hohlraum (7) oder das Schweißgas durch den zweiten Hohlraum (11) zugeführt wird.

2. Verfahren nach Anspruch 1, bei dem senkrecht zur Strahlrichtung Druckluft in den Laserbearbeitungskopf eingeblasen wird.

## Claims

1. Method of laser processing of a workpiece using a laser processing head comprising a processing nozzle (1), wherein cutting gas as well as welding gas can be supplied to the workpiece by means of the processing nozzle (1) in dependence on the selected type of laser processing, **characterized in that** the processing nozzle (1) comprises an inner sleeve (2b) and an outer sleeve (6) which surrounds the inner sleeve (2b), wherein a first cavity (7) is formed between the two sleeves (2b; 6) and wherein the outer sleeve (6) has a second cavity (11) which is arranged concentrically with the first cavity (7), and that, in a direction concentric with the laser beam (5), either the cutting gas is supplied through the first cavity (7) or the welding gas is supplied through the second cavity (11).

2. Method according to claim 1, in which pressurized air is blown into the laser processing head in a direction perpendicular to the beam direction.

## Revendications

1. Procédé d'usinage au laser d'une pièce avec une tête d'usinage au laser, laquelle présente une buse d'usinage (1), dans lequel aussi bien un gaz de coupe qu'un gaz de soudage, selon le choix de l'usinage au laser, peut être amené à la pièce à l'aide de la buse d'usinage (1), **caractérisé en ce que** la buse d'usinage (1) comprend un manchon intérieur (2b) et un manchon extérieur (6) qui entoure le manchon intérieur (2b), une première cavité (7) étant formée entre les deux manchons (2b ; 6) et le manchon extérieur (6) présentant une deuxième cavité (11) disposée concentriquement à la première cavité (7), et que soit le gaz de coupe à travers la première cavité (7), soit le gaz de soudage à travers la deuxième cavité (11) est amené concentriquement au faisceau laser (5).

2. Procédé selon la revendication 1, dans lequel de l'air comprimé est insufflé dans la tête d'usinage au laser perpendiculairement à la direction du faisceau.
